# EUROPÄISCHE PATENTSCHRIFT

(11) **EP 3 045 354 B1**
(45) Veröffentlichungstag und Bekanntmachung des Hinweises auf die Patenterteilung: **11.10.2017**
(21) Anmeldenummer: 16150193.7
(22) Anmeldetag: 05.01.2016
(51) Int. Cl.: B60R 19/48, B60R 11/04

(54) **VARIABLE BAUTEILABDECKUNG**
VARIABLE COMPONENT COVER
REVETEMENT DE COMPOSANT VARIABLE

(30) Priorität: 13.01.2015 DE 102015200369
(43) Veröffentlichungstag der Anmeldung: 20.07.2016
(73) Patentinhaber: Magna Exteriors GmbH, 63877 Sailauf (DE)
(72) Erfinder: HUTTENLOCHER, Marc, 72622 Nürtingen (DE)
(74) Vertreter: Rausch, Gabriele

(56) Entgegenhaltungen:
- DE-A1-102011 000 501

## Beschreibung

Die Erfindung geht aus von einem Bauteil für den Außenbereich eines Kraftfahrzeugs, das mindestens eine Aufnahmeöffnung für die Aufnahme eines elektronischen Sensors für den Außenbereich aufweist, wobei das Bauteil sowohl mit einem Deckel ohne Funktion als auch mit einem Träger für den elektronischen Sensor verschließbar ist und sowohl der Deckel als auch der Träger in eine Schwalbenschwanzführung des Bauteils einführbar sind.

### Stand der Technik

In modernen Kraftfahrzeugen werden zur Erfassung der Verkehrssituation elektronische Kameras, Nachtsichtsysteme, Radarsensoren usw. verwendet, welche von außen unsichtbar oder nahezu unsichtbar im Frontkühlergrill angeordnet sind. Diese Kameras bestehen aus einer Optik sowie einer als Flächenchip ausgebildeten Bildaufnahmevorrichtung mit einer nachgeschalteten Elektronik, so dass die Bildsignale über eine entsprechende Verkabelung; meist über ein Koax-Kabel; einer Auswerteelektronik zugeleitet werden können.

Bekannte Kamerasysteme sind über spezielle Halterungen an der Karosserie bzw. einem Montageträger angebracht. Die Optik der Kamera wird so justiert, dass das zu erfassende Gesichtsfeld durch die Strukturöffnungen des Kühlergrills passt, also keine Abschattungen, Sichtbeschränkungen erfolgen. Der Kühlergrill weist jedoch eine gewisse Lagetoleranz gegenüber der Karosserie, dem Montageträger auf. Um eine uneingeschränkte Bilderfassung zu gewährleisten, ist bei bekannten Einrichtungen daher eine Einstellbarkeit der Kamera, der Kamerahalterung um zwei oder drei Achsrichtungen erforderlich. Die zugehörigen Einstellschrauben, Einstellspindeln sind bei montiertem Kühlergrill und Stoßfänger jedoch - wenn überhaupt - nur eingeschränkt zugänglich. Entsprechend muss die Einstellung des Kamerasystems bspw. vor der Montage des Stoßfängers erfolgen, um eine Zugänglichkeit der durch dieses Bauteil verdeckten Einstellschrauben zu ermöglichen.

Bei Systemen, die im teil- oder vollmontierten Zustand von Kühlergrill und Stoßfänger nicht bzw. nicht um sämtliche Verstellachsen korrigiert werden können, sind als Toleranzausgleich entsprechend größere Aufnahmeöffnungen für die Optik vorzusehen. Größere Öffnungen im Kühlergrill stören jedoch die Optik bzw. sind mit einem vorhandenen Styling nicht zu vereinbaren. Natürlich sind Öffnungen auch schlecht für den cw-Wert und sollten vermieden werden.

Aus der DE 102010045106 A1 ist eine Lastenträgeranordnung bekannt, wobei eine Öffnung im Außenbereich des Fahrzeugs entweder von einem Deckel verschlossen wird oder als Aufnahme eines Lastenträgers dient, wobei dieser Lastenträger den Außenbereich des Fahrzeugs nicht verschließt und nahezu senkrecht zur Außenkontur des Fahrzeugs montiert ist.

Aus der US20140347959A1 ist eine Sensorhalterung auf einen Träger bekannt, der mit einem Rahmen montiert ist, wobei kein Hinweis auf ein Verschließen der Außenkontur mit einem funktionslosen Deckel vorliegt.

DE102011000501 A1 zeigt eine Baugruppe nach dem Oberbegriff des Anspruchs 1. Aus der DE 102011000683A1 ist eine Montageeinheit mit einer Kamera bekannt, die vorgefertigt und dann im Fahrzeug montiert wird.

Das Problem ist dabei immer, dass das Fugenbild für solche eingesetzten Bauteilen nicht zufriedenstellend ist.

Es ist daher Aufgabe der Erfindung ein Bauteil mit einem Träger für einen elektrischen Sensor oder allgemein ein elektrisches Bauteil zu schaffen, das ein unauffälliges Fugenbild hat.

Die Aufgabe wird gelöst mit einem Bauteil für den Außenbereich eines Kraftfahrzeugs, das mindestens eine Aufnahmeöffnung für die Aufnahme eines elektrischen Bauteils für den Außenbereich aufweist, wobei das Bauteil sowohl mit einem Deckel ohne Funktion als auch mit einem Träger für das elektrische Bauteil verschließbar ist und sowohl der Deckel als auch der Träger in eine Schwalbenschwanzführung des Bauteils einführbar sind.

Die Schwalbenschwanzführung gewährleistet, dass die Aufnahmeöffnung entweder vom Deckel oder vom Träger bündig entlang ihres Längsverlaufs verschlossen ist und sich die Komponenten formschlüssig verbinden lassen.

Vorteilhafterweise lassen sich Funktionselemente wie der Träger für ein elektrisches Bauteil als auch einfache Deckel ohne Funktion integrieren, sodass eine Variantenbildung einfacher zu realisieren ist.

Es ist von Vorteil, dass der Deckel oder Träger eine Trapez-Form haben und entlang ihren Längsseiten Nuten für die Schwalbenschanzführung aufweisen, womit sie auf einfache Art und Weise in das Bauteil einfügbar sind.

Von Vorteil ist dabei, dass Deckel oder Träger entlang ihrer Längsseiten eine unter einem Winkel angestellte Führungskante aufweisen. Diese bauliche Ausgestaltung erlaubt eine straffe Verbindung der Schwalbenschwanzführungen, so dass die Aufnahmeöffnung satt verschlossen ist.

Vorteilhafterweise zeigen Deckel oder Träger an ihrer schmalen Seite Haken zur Arretierung in Ausnehmungen im Bauteil. Diese dienen der Vorzentrierung oder der eigentlichen Zentrierung des Deckels oder Trägers im Bauteil.

Für die Integration eines Sensors weist der Träger mindestens eine Öffnung nach außen auf.

Für manche elektronischen Sensoren reicht es dagegen aus, wenn der Träger mindestens eine Schwächung seiner Dicke aufweist.

Dabei ist es möglich, dass der Träger eine Kamera, einen Radarsensor, einen Infrarotsensor oder ein Leuchtmittel oder einen Kombination der elektrischen Bauteile aufnimmt.

Es ist von Vorteil, wenn Deckel und Bauteil aus unterschiedlichen Kunststoffen bestehen.

Es ist auch möglich den Deckel aus Zweikomponentenkunststoff herzustellen wobei ein Komponentenanteil durchlässig für Radarstrahlen, Bilderkennung, usw. ist und entlang eines Kreisausschnitts nur die transparente Komponente vorliegt.

### Beschreibung der Erfindung

Die Erfindung wird nachfolgend beispielhaft unter Bezugnahme auf die beigefügte Zeichnung beschrieben.
- Figur 1: zeigt eine schematische Darstellung der beispielhaften Ausführungsform eines Bauteils von außen
- Figur 2: zeigt eine Perspektive des Bauteils von innen
- Figur 3: und Fig. 4 zeigen einen Deckel
- Figur 5: und Fig. 6 zeigen einen Träger mit Öffnung
- Figur 7: zeigt einen Träger mit Schwächung
- Figur 8: zeigt einen Träger mit Deckel
- Figur 9: zeigt einen Träger als 2K Bauteil

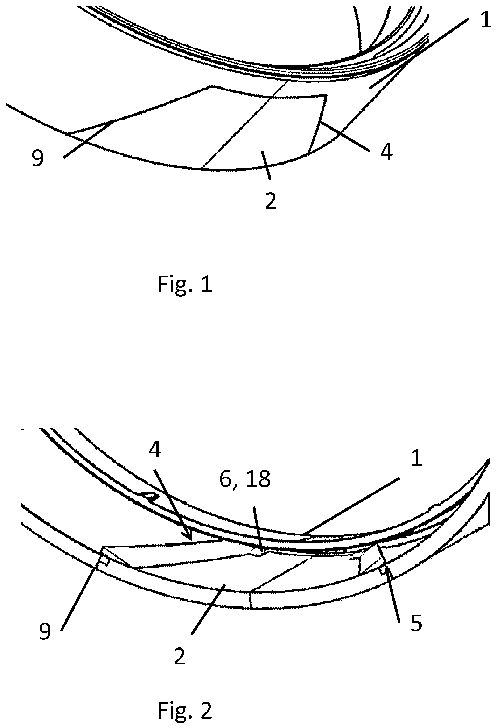

Ein Bauteil 1 ist den Figuren 1 und 2 dargestellt. Es handelt sich dabei um ein Kunststoffbauteil, wie sie im Fahrzeug in Front- und Heckbereich verwendet werden. Beispielsweise kann ein solches Bauteil ein Frontmodul oder Heckmodul sein oder eine Schürze oder eine Verkleidung, die aus Kunststoff hergestellt ist.

In Figur 1 ist eine Ansicht auf das Bauteil von außen dargestellt. Man erkennt einen abgerundeten Verlauf des Bauteils 1, in dem ein Deckel 2 eingebracht ist. Der Deckel 2 besitzt eine Trapez-Form, die sich an den Verlauf der Außenkontur anpasst und die Aufnahmeöffnung des Bauteils vollständig verschließt. Der Deckel folgt dabei der Kontur der Außenfläche des Bauteils 1 und kann eben sein oder der Rundung des Bauteils 1 folgen. Die Abschlusskante 9 zeigt keine Spalte und das Bauteil erweckt zusammen mit dem Deckel 2 ein einheitliches Äußeres. Designtechnisch kann auch eine Art "Schattenfuge" gewollt sein, was mit der beschriebenen Lösung ebenfalls darstellbar ist.

In Figur 2 wird das Bauteil 1 von innen dargestellt. Man erkennt den Deckel 2, der die Aufnahmeöffnung 4 vollständig verschließt.

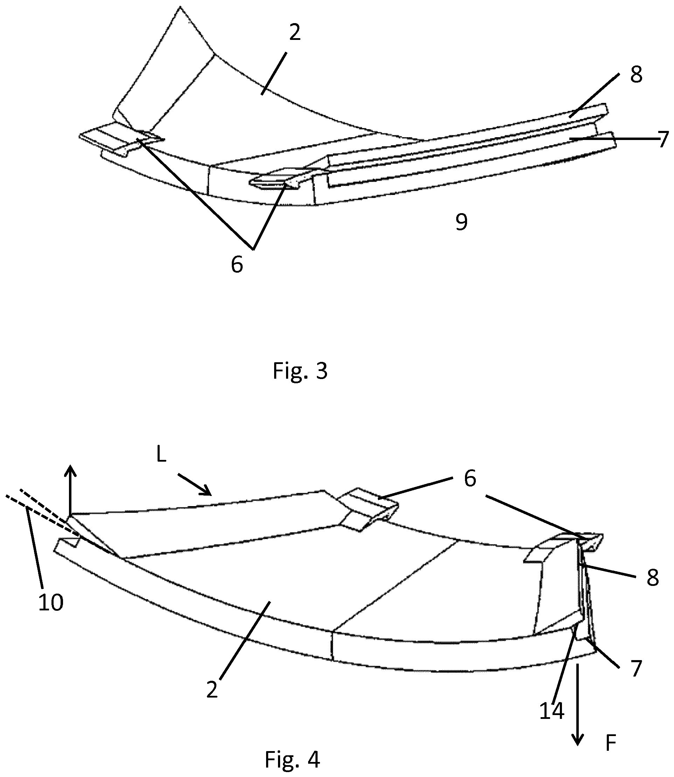

Die Figuren 3 und 4 zeigten Details des Deckels 2. Der Deckel besitzt an seinen jeweiligen Längsseiten L eine Nut 7, in der das passende Gegenstück des Bauteils 1 eingreift. Zudem erstreckt sich entlang der Längsseiten jeweils eine Führungskante 8. Diese ist als von der Fläche des Deckels sich in einem Winkel 10 weg erstreckende Struktur ausgebildet. Dabei entsteht ein Bereich der Nut 7 ein Überstand 14, der sich leicht schräg von der Nut weg erstreckt.

Die Schwalbenschwanzführung 5 des Bauteils 1 greift in die Nut 7 ein, wie man aus Figur 2 ersieht. Die Schwalbenschwanzführung des Bauteils, bestehend aus einer Rippe, ist dabei etwas größer als es der Höhe der Nut 7 entspräche, dimensioniert, so dass beim Einführen des Deckels 2 in das Bauteil 1 die Führungskante 8 mit ihrem Überstand 14 nach oben in Richtung des Pfeils gedrückt wird. Durch die Elastizität des Kunststoffmaterials wird dadurch eine Kraft F in Richtung der Außenseite des Deckels und des Bauteils ausgeübt. Dadurch wird ein besserer Sitz erreicht und die Fuge 9 dicht verschlossen. Zur weiteren Arretierung des Deckels und zu seiner Zentrierung sind Haken 6 vorgesehen, die in geeignete Ausnehmungen 18 des Bauteils eingreifen. Im Ausführungsbeispiel sind zwei Haken vorhanden, aber es gibt auch die Möglichkeit den Deckel 2 oder einen Träger 3 mit einem Haken zu befestigen. Alternativ ist auch die Verwendung mehrerer Haken oder eine Befestigung und Zentrierung mit Schrauben, Pins und Klipsen möglich.

Der Verschluss des Bauteils mit einem Deckel ist nur eine Variante, wenn der Kunde oder der Fahrzeughersteller keine Funktionalitäten am Einbauort wünscht.

Die Aufnahmeöffnung 4 dient aber vordringlich zur Aufnahme eines Trägers 3, dessen Befestigung und Führung im Bauteil 1 mit der des Deckels 2 identisch ist.

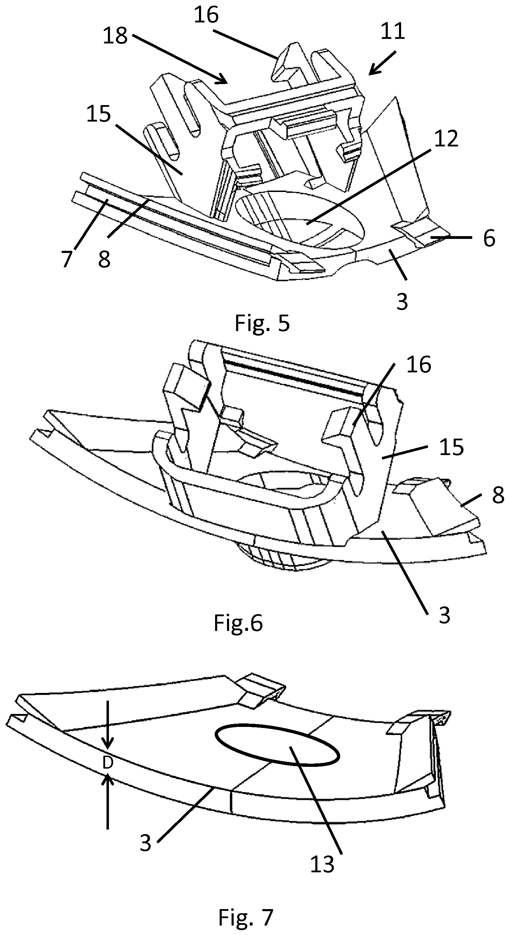

Der Träger 3 besitzt in einer Ausführungsform nach Figur 5 und 6 eine Halterung 11 mit einer Rahmenstruktur 15 und Klipsen 16. Über eine im Träger 3 vorgesehene Öffnung 12 kann beispielsweise das Objektiv einer Kamera Signale aufnehmen. Die Halterung wird an die Funktion und den Bedarf des elektrischen Bauteiles angepasst, das in der Ausnehmung 4 des Bauteils 1 eingebaut werden soll.

Für den Einbau sind unterschiedliche Sensoren vorgesehen wie optische Sensoren also Kameras oder Sensoren im nicht sichtbaren Spektralbereich wie Radarsensoren oder Infrarotsensoren. Auch Ultraschallsensoren wären mögliche elektrische Bauteile. Die Sensoren werden vormontiert und in die Rahmenstruktur oder in eine geeignete Halterung des Trägers 3 eingesetzt.

Die Ausnehmung 4 des Bauteils kann auch zur Aufnahme von Leuchtmitteln dienen. Der Träger erfüllt dann die Funktion einer Ambientebeleuchtung, die aus Designgründen vorgesehen ist oder für die Aufnahme eines Funktionslichts wie eines Blinkers und eines Tagfahrlichts, einer Umfeldleuchte, oder eines Warnlichts. Auch die Kombination von elektrischen Bauteilen ist möglich: so kann eine aktive Infrarotbeleuchtung neben einem Sensor angeordnet sein, ein Leuchtmittel mit einem Ultraschallsensor verbunden werden oder ein Radarsensor in eine Ambientebeleuchtung integriert sein.

In der Ausführungsform nach Figur 7 ist der Träger 3 nicht mit einer Öffnung 12 versehen, sondern das Material des Trägers wird lediglich im Bereich 13 eines Sensors oder eines Leuchtmittels schwächer ausgelegt.

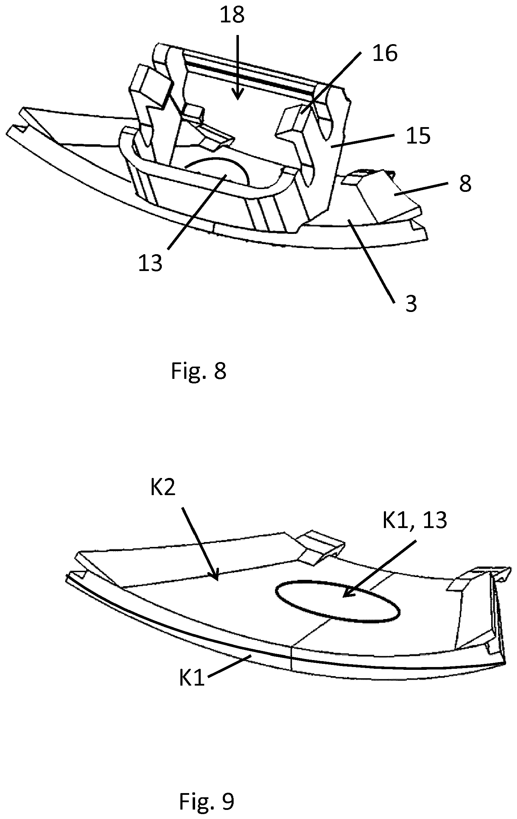

Der Träger 3 ist somit mit einem Deckel 2 geschlossen wie in Figur 8 dargestellt.

Die Dicke des Kunststoffmaterials des Trägers 3 mit geschlossenem Deckel 2 wird so gewählt, dass die Stabilität gegeben ist, aber die Signale für den Sensor, beispielsweise einen Radarsensor durch die Kunststoffschicht durchtreten können. Der Bereich der reduzierten Dicke wird für den spezifischen Sensor gewählt. Ausgehend von einer Dicke D des Trägers 3 wird eine Dicke d <D gewählt. Natürlich sind auch in dieser Ausführungsform Halterungen und Klipse zur Verbindung mit einem Sensor möglich.

Als mögliche Sensoren kommen Infrarotsensoren oder Radarsensoren zum Einsatz, die durch geeignetes Kunststoffmaterial arbeiten können, wenn es nicht allzu sehr dämpft.

Auch eine Lichtquelle kann durch das Kunststoffmaterial durchscheinen.

Zur Herstellung des Deckels 2 und/oder des Trägers 3 mit oder ohne Deckel wird ein Kunststoffmaterial gewählt, das entweder dem Bauteil 1 entspricht oder eben aus einem anderen Kunststoffmaterial besteht. Für das Funktionsbauteil kann dabei ein für die Anwendung geeignetes Material gewählt werden, das im Spektralbereich der Funktion durchlässig ist.

Eine weitere Ausführungsform nach Figur 9 stellt den Träger mit Deckel in einem Zweikomponentenspritzguss her. Dabei ist eines der Kunststoffmaterialien transparent oder semitransparent für die jeweilige Anwendung, die zweite Komponente entsprich vorteilhafterweise dem Material des Bauteils 1.
Die zweite Komponente K1 bildet beispielsweise die Basis für den Spritzguss und bildet einen Bereich 13 aus, indem nur noch die erste Komponente K1 vorhanden ist. Die zweite Komponente K2 weist dann im Bereich 13 eine Aussparung auf. Alternativ dazu kann auch die Komponente K1 nur im Bereich 13 eingespritzt sein.

Damit kann der Träger aus Material hergestellt sein, das dem Material des Bauteiles 1 entspricht und somit dieselben thermischen Ausdehnungen aufweist.

Durch die vorgestellte Lösung lässt sich in einer Ausnehmung eines Fahrzeugbauteils unterschiedliche Funktionsbauteile einbauen und damit eine einfache Variantenbildung herstellen Die beschriebenen Bauteile stellen Beispiele dar, die erfindungsgemäße Lösung kann vom Fachmann breit eingesetzt werden.

### Bezugszeichenliste

1 Bauteil
2 Deckel
3 Träger
4 Aufnahmeöffnung
5 Schwalbenschwanzführung
6 Haken
7 Nut
8 Führungskante
9 Abschlusskante
10 Winkel
11 Halterung
12 Öffnung
13 reduzierte Dicke
14 Überstand
15 Rahmenstruktur
16 Klipse
D Dicke
L Längsseiten443
18 Ausnehmungen für Haken
K1, K2 erster und zweiter Kunststoff

## Patentansprüche

1. Baugruppe bestehend aus einem Bauteil (1) für den Außenbereich eines Kraftfahrzeugs, das mindestens eine Aufnahmeöffnung (4) für die Aufnahme eines elektrischen Bauteils (17) für den Außenbereich aufweist, sowie einem Deckel (2) ohne Funktion oder einem Träger (3) für ein elektrisches Bauteil, wobei das Bauteil (1) entweder mit dem Deckel (2) oder mit dem Träger (3) verschließbar ist und sowohl der Deckel (2) als auch der Träger in eine Schwalbenschwanzführung (5) des Bauteils (1) einführbar sind, **dadurch gekennzeichnet, dass** der Deckel (2) oder der Träger (3) entlang ihrer Längsseiten (L) eine unter einem Winkel (10) angestellte Führungskante (8) und Nuten (7) für die Schwalbenschwanzführung (5) aufweisen und die Schwalbenschwanzführung (5) des Bauteils eine Rippe besitzt, die größer als die Höhe der Nut (7) ausgebildet ist.

2. Bauteil nach Anspruch 1, **dadurch gekennzeichnet, dass** der Deckel (2) oder der Träger (3) eine Trapez-Form haben, die sich an den Verlauf der Außenkontur anpasst.

3. Bauteil nach einem der vorhergehenden Ansprüche, **dadurch gekennzeichnet, dass** der Deckel (2) oder der Träger (3) das Bauteil nach außen mit einer unsichtbaren Abschlusskante (9) oder einer Schattenfuge verschließen.

4. Bauteil nach einem der vorhergehenden Ansprüche, **dadurch gekennzeichnet, dass** der Deckel (2) oder der Träger (3) an ihrer schmalen Seite Haken (6) zur Arretierung in entsprechenden Ausnehmungen (18) im Bauteil (1) aufweisen.

5. Bauteil nach einem der vorhergehenden Ansprüche, **dadurch gekennzeichnet, dass** das Bauteil (1) aus einem ersten Material und der Deckel (2) aus einem zweiten Material besteht.

6. Bauteil nach Anspruch 5, **dadurch gekennzeichnet, dass** das zweite Material für den zu erfassenden oder ausgehenden Spektralbereich transparent ist.

7. Bauteil nach einem der vorhergehenden Ansprüche, **dadurch gekennzeichnet, dass** der Deckel (2) aus Zweikomponentenspritzguss hergestellt ist.

8. Bauteil nach einem der vorhergehenden Ansprüche, **dadurch gekennzeichnet, dass** der Träger (3) mindestens eine Öffnung (12) nach außen aufweist.

9. Bauteil nach einem der vorhergehenden Ansprüche, **dadurch gekennzeichnet, dass** der Träger (3) einen Deckel besitzt, der mindestens eine Schwächung (13) seiner Dicke (D) aufweist.

10. Bauteil nach einem der vorhergehenden Ansprüche, **dadurch gekennzeichnet, dass** der Träger (3) einen Deckel (2) besitzt, bei dem der Kunststoff aus einem Zweikomponentenmaterial besteht und mindestens in einem Bereich nur das für den gewünschten Spektralbereich transparente Material vorliegt.

11. Bauteil nach einem der vorhergehenden Ansprüche, **dadurch gekennzeichnet, dass** der Träger (3) eine Kamera, einen Radarsensor, einen Infrarotsensor oder eine Lichtquelle oder eine Kombination der elektrischen Bauteile aufnimmt.

## Claims

1. Assembly consisting of a component (1) for the external region of a motor vehicle, said component exhibiting at least one receiving aperture (4) for the reception of an electrical component (17) for the external region, and a cover (2) without function or a support (3) for an electrical component, the component (1) being capable of being sealed either with the cover (2) or with the support (3), and both the cover (2) and the support being capable of being introduced into a dovetail guide (5) of the component (1), **characterized in that** the cover (2) or the support (3) exhibits along its longitudinal sides (L) a guide edge (8) which is set at an angle (10) and grooves (7) for the dovetail guide (5) and the dovetail guide (5) of the component has a rib formed so as to be larger than the height of the groove (7).

2. Component according to Claim 1, **characterized in that** the cover (2) or the support (3) has a trapezoidal shape which is adapted to the profile of the outer contour.

3. Component according to either of the preceding claims, **characterized in that** the cover (2) or the support (3) seals the component outwardly with an almost invisible terminating edge (9) or with a shadow gap.

4. Component according to one of the preceding claims, **characterized in that** the cover (2) or the support (3) exhibits, on its narrow side, hooks (6) for locking in corresponding recesses (18) in the component (1).

5. Component according to one of the preceding claims, **characterized in that** the component (1) consists of a first material, and the cover (2) consists of a second material.

6. Component according to Claim 5, **characterized in that** the second material is transparent to the spectral region to be registered or emanating.

7. Component according to one of the preceding claims, **characterized in that** the cover (2) has been produced from two-component injection moulding.

8. Component according to one of the preceding claims, **characterized in that** the support (3) exhibits at least one opening (12) towards the outside.

9. Component according to one of the preceding claims, **characterized in that** the support (3) possesses a cover which exhibits at least one diminution (13) of its thickness (D).

10. Component according to one of the preceding claims, **characterized in that** the support (3) possesses a cover (2) wherein the synthetic material consists of a two-component material, and only the material that is transparent to the desired spectral region is present in at least one region.

11. Component according to one of the preceding claims, **characterized in that** the support (3) receives a camera, a radar sensor, an infrared sensor or a light-source or a combination of the electrical components.

## Revendications

1. Unité de montage constituée d'un élément de structure (1) pour la zone externe d'un véhicule à moteur, lequel présente au moins une ouverture de réception (4) pour la réception d'un élément de structure (17) électrique pour la zone externe, ainsi qu'un couvercle (2) dépourvu de fonction ou un support (3) pour un élément de structure électrique ;
dans laquelle l'élément de structure (1) peut être verrouillé soit avec le couvercle (2), soit avec le support (3) et tant le couvercle (2) que le support peuvent être mis en place dans un guidage en forme de queue d'aronde (5) de l'élément de structure (1) ;
**caractérisée en ce que** le couvercle (2) ou le support (3) présentent, le long de leurs faces longitudinales (L), une bordure de guidage (8), laquelle est inclinée selon un certain angle (10), et des rainures (7) pour le guidage en forme de queue d'aronde (5) et le guidage en forme de queue d'aronde (5) de l'élément de structure possède une nervure qui est conçue de manière plus grande que la hauteur de la rainure (7).

2. Élément de structure selon la revendication 1, **caractérisé en ce que** le couvercle (2) ou le support (3) a une forme en trapèze qui s'adapte au prolongement du contour externe.

3. Élément de structure selon l'une des revendications précédentes, **caractérisé en ce que** le couvercle (2) ou le support (3) verrouille l'élément de structure vers l'extérieur avec un rebord terminal (9) invisible ou avec un joint creux.

4. Élément de structure selon l'une des revendications précédentes, **caractérisé en ce que** le couvercle (2) ou le support (3) présente des crochets (6) au niveau de sa face étroite, en vue du blocage dans des cavités (18) correspondantes qui sont situées dans l'élément de structure (1).

5. Élément de structure selon l'une des revendications précédentes, **caractérisé en ce que** l'élément de structure (1) est constitué à partir d'un premier matériau et le couvercle (2) est constitué à partir d'un second matériau.

6. Élément de structure selon la revendication 5, **caractérisé en ce que** le deuxième matériau est transparent pour la gamme spectrale sortante ou à détecter.

7. Élément de structure selon l'une des revendications précédentes, **caractérisé en ce que** le couvercle (2) est fabriqué à partir d'une injection en bi-composant.

8. Élément de structure selon l'une des revendications précédentes, **caractérisé en ce que** le support (3) présente au moins une ouverture (12) vers l'extérieur.

9. Élément de structure selon l'une des revendications précédentes, **caractérisé en ce que** le support (3) possède un couvercle qui présente au moins un affaiblissement (13) de son épaisseur (D).

10. Élément de structure selon l'une des revendications précédentes, **caractérisé en ce que** le support (3) possède un couvercle (2), pour lequel la matière plastique est constituée à partir d'un matériau à deux composants et seul le matériau transparent pour la gamme spectrale souhaitée se situe au moins dans une plage.

11. Élément de structure selon l'une des revendications précédentes, **caractérisé en ce que** le support (3) accueille une caméra, un capteur radar, un capteur à infrarouge ou une source de lumière ou une combinaison des éléments de structure électriques.
